# EUROPÄISCHE PATENTSCHRIFT

(11) **EP 2 462 075 B1**
(45) Veröffentlichungstag und Bekanntmachung des Hinweises auf die Patenterteilung: **30.03.2016**
(21) Anmeldenummer: 09778899.6
(22) Anmeldetag: 02.12.2009
(51) Int. Cl.: C04B 28/14, C04B 38/10, C04B 35/16, C04B 35/18, C04B 35/195, C04B 35/626

(54) **ZUSAMMENSETZUNG FÜR EINEN FEUERLEICHTSTEIN MIT HOHEM ANORTHITANTEIL**
COMPOSITION FOR A LIGHT-WEIGHT REFRACTORY BRICK HAVING A HIGH ANORTHITE PERCENTAGE
COMPOSITION POUR UNE BRIQUE RÉFRACTAIRE LÉGÈRE AYANT UNE TENEUR ÉLEVÉE EN ANORTHITE

(43) Veröffentlichungstag der Anmeldung: 13.06.2012
(73) Patentinhaber: PROMAT GmbH, 40878 Ratingen (DE)
(72) Erfinder: KRASSELT, Volker, 40885 Ratingen (DE); FEULNER, Hans-Joachim, 45239 Essen (DE); MELZER, Dieter, 09599 Freiberg (DE); YAO, Chunzhan, Tangshan City (CN); YANG, Xiaochun, Tangshan City (CN); YU, Xiaojing, Tangshan City (CN)
(74) Vertreter: Weisbrodt, Bernd
(86) Internationale Anmeldenummer: PCT/EP2009/008564
(87) Internationale Veröffentlichungsnummer: WO 2011/066842

(56) Entgegenhaltungen:
- EP-A2- 0 298 701
- WO-A1-03/068708
- US-A- 3 297 801
- US-A- 4 248 637

## Beschreibung

Die vorliegende Erfindung betrifft eine Zusammensetzung zur Herstellung eines Feuerleichtsteins, enthaltend wenigstens ein Aluminiumsilikat und/oder ein Calcium-Aluminiumsilikat sowie ein anorganisches Bindemittel. Die Erfindung betrifft ferner einen Feuerleichtstein, dessen Verwendung sowie ein Verfahren zu dessen Herstellung.

Derartige Zusammensetzungen sind aus dem Stand der Technik bekannt. So wird beispielsweise in der DE 41 35 441 A1 ein Rohmaterial aus einer Mischung enthaltend 15 - 25 % eines Tons oder Tonminerals, 20 - 50 % Schamotte und 20 - 50 % eines Porosiermittels beschrieben, welches einem Formgebungs- und anschließenden Trocknungsprozesses, danach einer langsamen Erhitzung und einem keramischen Brand unterzogen wird. Dabei ist eine langsame Aufheizrate im Temperaturbereich zwischen etwa 700° C und etwa 1.000° C von maximal 250 K pro Stunde einzuhalten. Die so erhaltenen Feuerleichtsteine besitzen nur eine mäßige Isolationswirkung. Außerdem wirkt sich die langsame Aufheizrate nachteilig auf die Produktionsgeschwindigkeit aus.

Weiterhin ist aus der EP 059543 A1 eine Zusammensetzung zur Herstellung eines Feuerleichtsteins beschrieben, welche 55 - 95 Gew-% eines Tonminerals, sowie jeweils 0 - 45 Gew.-% an Quarz, Feldspat sowie Glimmer enthält, wobei wenigstens 5 Gew.-% der Zusammensetzung aus Glimmer und/oder Feldspat besteht. Bei der Herstellung werden die zuvor genannten Ausgangsstoffe in einer Wasservorlage homogenisiert, die auf diese Weise erhaltene Mischung mit einem organischen Schaum auf ein vorgegebenes Litergewicht gebracht und dann in Gießformen abgegossen. Die auf diese Weise hergestellten Rohlinge werden anschließend getrocknet, gebrannt und schließlich auf das erforderliche Maß zugeschnitten. Solche Steine besitzen zwar eine geringe Wärmeleitfähigkeit und damit gute Isolationseigenschaften, weisen jedoch eine geringe Druckfestigkeit und auch einen geringen Widerstand gegen Temperaturwechselbeanspruchung auf, was in einigen Anwendungsbereichen Nachteile mit sich bringt.

Ferner ist aus der WO 03/008357 eine Schaumkeramik mit gerichteter Porenstruktur bekannt, welche aus einer keramischen Masse auf Aluminiumoxid-/Silikatbasis und/oder Carbidbasis und/oder Zirkonoxid-Basis und/oder Hydroxylapatitbasis aufgebaut ist. Bei der Herstellung von Feuerleichsteinen aus diesen Materialien wird in der Weise vorgegangen, dass eine gerichtete, offene oder geschlossene Porenstruktur erhalten wird. Das Herstellverfahren ist aufwendig und komplex, so dass bislang keine bekannte praktische Umsetzung dieses Verfahrens bekannt ist.

Schließlich sind aus der US 3,297,801 isolierende Feuerfeststeine bekannt, welche aus einer Mischung aus Ton, Gips, Sägemehl sowie Schamotte zusammengesetzt sind. bei der Herstellung werden diese Komponenten mit Ausnahme von Gips zunächst mit Wasser zu einem Gießschlicker verarbeitet, dem anschließend der Gips zugegeben wird, dann in Formen gegossen und ausgehärtet wird. Nachteilig bei solchen Steinen ist deren hoher Anteil an Quarz, insbesondere an Cristoballit, welches als potentiell karzinogen eingestuft wird. Diese Substanzen können beim Schneiden freigesetzt werden und beim Einatmen durch das Bedienpersonal Gesundheitsschäden hervorrufen.

Aus der EP 0 298 701 A2 ist ein mikroporöses Material, im Wesentlichen bestehend aus CaO, Al₂O₃ und SiO₂ bekannt, welches im Wesentlichen aus Anorthit und Tonerde besteht, mit einem Verhältnis SiO₂/Al₂O₃ < 2 und CaO/ SiO2 < 1. Das aus der EP 0 298 701 A2 bekannte mikroporöse Material enthält insofern kein anorganisches Bindemittel.

Neben den zuvor genannten Nachteilen ist ferner das Schwundverhalten dieser Feuersteine zum Teil nicht zufriedenstellend. Dies macht sich dadurch bemerkbar, dass nach dem Verbauen solcher Steine in Öfen Risse an den Fugen zwischen den Steinen auftreten können, welche das Isolationsverhalten der Gesamten Feuerschutzauskleidung beeinträchtigt. Außerdem können Verbrennungsgase, welche häufig ein hohes korrosives Potential besitzen, durch solche Risse an das Ofenmaterial gelangen.

Die Aufgabe der vorliegenden Erfindung besteht in der Schaffung einer Zusammensetzung für Feuerleichtsteine, welche die zuvor genannten Nachteile nicht aufweist. Insbesondere soll mit der Zusammensetzung die Herstellung von Feuerieichtsteinen ermöglicht werden, die einerseits eine gute Isolationswirkung und eine hohe Resistenz gegen Temperaturwechselbeanspruchungen besitzen und dabei andererseits eine hohe Druckfestigkeit aufweisen. Die Steine sollen sich ferner auch leicht verarbeiten lassen, insbesondere einen geringen Schwund aufweisen. Außerdem soll die Herstellung der Steine mit geringem Aufwand bei gleichzeitig kurzen Produktionszeiten erfolgen können.

Diese Aufgabe wird bei einer Zusammensetzung der eingangs genannten Art dadurch gelöst, dass diese einen Gehalt an Calciumsilikaten von 5 bis 25 Gew.-% bezogen auf die trockene Zusammensetzung aufweist.

Der Erfindung liegt die Erkenntnis zugrunde, dass bei der Herstellung von Feuerleichtsteinen aus solchen Zusammensetzungen sich beim Brennen der Steine während der Herstellung ein hoher Gehalt an Anorthit einstellt, worunter ein Gehalt von wenigstens 75 Gew.-% verstanden wird.

Es wird dabei vermutet, dass dieser hohe Gehalt an Anorthit für die guten Eigenschaften der erfindungsgemäßen Feuerleichtsteine verantwortlich ist, insbesondere deren geringes Wärmeleitvermögen bei gleichzeitig hoher Temperaturwechselbeanspruchbarkeit und Druckfestigkeit.

Gleichzeitig zeichnen sich die erhaltenen Steine durch einen geringen Gesamtgehalt an Quarz und Cristobalit aus, welcher insbesondere bei weniger als 10 Gew.-% liegt

Unter Calciumsilikaten werden im Sinne der vorliegenden Erfindung solche Verbindungen verstanden, welche nahezu ausschließlich aus den Elementen Calcium, Silizium und Sauerstoff aufgebaut sind. Das heißt, derartige Verbindungen besitzen insbesondere einen Gehalt an Fremdmetallionen wie beispielsweise Aluminium oder Magnesium im Bereich von weniger als 6 Gew.-%, vorzugsweise von weniger als 3 Gew.-%. Besonders geeignete Calciumsilikate zum Einsatz in den zuvor genannten erfindungsgemäßen Zusammensetzungen sind ausgewählt aus Xonotlit, Tobermorit, CSH-Phasen, Wollastonit oder Mischungen von diesen. Unter CSH-Phasen werden Minerale bzw. allgemein Stoffe verstanden, welche eine komplexe Zusammensetzung der allgemeinen Form x CaO y SiO₂ z H₂O besitzen. Sie werden auch als Calciumsilikathydrate bezeichnet.

Als Aluminiumsilikat bzw. Calcium-Aluminiumsilikat kommen im Rahmen der vorliegenden Erfindung Tone, Bentonite, Kyanit, Feldspat, Schichtsilikate, insbesondere Glimmer zum Einsatz. Diese Substanzen werden üblicherweise in feinpartikulärer Form eingesetzt, üblicherweise mit Partikelgrößen im µm-Bereich. So betragen die Korngrößen eingesetzter Tone, Bentonite und Calciumsilikate vorzugsweise 100 µm oder weniger. Kyanit wird bevorzugt in einer Korngröße von bis zu 500 µm eingesetzt.

Eine bevorzugte erfindungsgemäße Zusammensetzung zeichnet sich durch einen Gehalt an Calciumsilikaten von 7 - 15 Gew.-% bezogen auf die trockene Zusammensetzung aus. Werden aus solchen Zusammensetzungen Feuerleichtsteine hergestellt, so zeichnen sich diese durch einen hohen Gehalt an Anorthit aus. Sie besitzen außerdem ein hohes Isolationsvermögen und eine gute Druckfestigkeit.

Unter dem Begriff einer trockenen Zusammensetzung wird im Sinne der vorliegenden Erfindung verstanden, dass diese einen Wasserhalt von weniger als 5 Gew.-%, insbesondere weniger als 0,5 Gew.-% aufweist. Nicht berücksichtigt hierbei wird Wasser, welches in Form von Kristallwasser in den Bestandteilen enthalten ist.

Zur Herstellung der erfindungsgemäßen Zusammensetzung werden deren Einzelbestandteile ggf. nach einem vorangehenden Siebprozess zur Entfernung möglicherweise vorhandener Agglomerate in einem Mischer miteinander vermischt.

Erfindungsgemäße Zusammensetzungen enthalten ein Bindemittel. Der Begriff des Bindemittels ist im Rahmen der vorliegenden Erfindung sehr umfassend zu verstehen, wobei mit diesem Begriff im Rahmen der vorliegenden Erfindung insbesondere hydraulische, nicht-hydraulische, latent hydraulische und puzzolanische Bindemittel sowie deren Mischungen bezeichnet werden.

Bindemittel, die nur an Luft erhärten, so genannte "Luftbinder", sind nicht-hydraulische Bindemittel, welche für die erfindungsgemäßen Zusammensetzungen besonders bevorzugt sind. Hierunter fallen beispielsweise Gips, Calciumsulfat-Halbhydrat, Anhydrit, Sorelzement, Magnesiabindemittel und Weißkalk. Von diesen sind die Calciumsulfatbasierenden Bindemittel wie Gips, Calciumsulfat-Halbhydrat und Anhydrit besonders bevorzugte nicht-hydraulisches Bindemittel.

Ebenfalls einsetzbar sind weiterhin hydraulische Kalke und Zemente, welche unter die Gruppe der hydraulischen Bindemittel zu fassen sind, welche sich dadurch auszeichnen, dass sie auch unter Wasser abbinden. Erfolgt der Abbindevorgang erst durch Einwirkung von Zusätzen bzw. Anregern, spricht man von latent hydraulischen Bindemitteln, wie im Fall von Hochofenschlacken. Für weitergehende Einzelheiten zum Begriff des Bindemittels wird verwiesen auf das Römpp Chemie Lexikon, Georg Thieme Verlag, Stuttgart/New York, 1999, Band 6, Seiten 433/434.

Auch wenn es prinzipiell vorgesehen ist, das Bindemittel unmittelbar in die erfindungsgemäße Zusammensetzung einzumischen, kann das Bindemittel auch zunächst separat gehalten werden. In diesem Fall umfasst die erfindungsgemäße Zusammensetzung ein 2-Komponenten System, bei dem das Bindemittel in der einen Komponente und die weiteren Inhaltsstoffe in der anderen Komponente enthalten sind. Eine solche Aufteilung empfiehlt sich insbesondere dann, wenn verhältnismäßig schnell abbindende Bindemittel verwendet werden, wie beispielsweise Gips, Calciumsulfat-halbhydrat oder Anhydrit. Dies gilt vor allem dann, wenn die Zusammensetzung keine Abbindeverzögerer enthält. Der aus der Aufteilung in zwei separate Komponenten erwachsende Vorteil besteht darin, dass bei der Herstellung von Feuerleichtsteinen aus einer erfindungsgemäßen Zusammensetzung zunächst die Feststoffkomponenten gleichmäßig in Wasser dispergiert werden können ohne dass ein Zeitdruck dadurch entsteht, dass mit der Zugabe des Wassers bereits die Abbindereaktion des Bindemittels in Gang kommt.

Eine Weiterbildung der erfindungsgemäßen Zusammensetzung zeichnet sich dadurch aus, dass sie einen Gehalt an Bindemittel von 5 - 40 Gew.-% besitzt, vorzugsweise 10 - 30 Gew.-%, besonders bevorzugt 15 - 25 Gew.-%, wobei diese Gehaltsangaben sich jeweils auf die trockene erfindungsgemäße Zusammensetzung beziehen, wie sie oben definiert ist.

Nach einer bevorzugten Ausführungsform der erfindungsgemäßen Zusammensetzung beträgt das Gewichtsverhältnis zwischen Aluminiumsilikat und/oder Calcium-Aluminiumsilikat zu der Summe aus Bindemittel und Calciumsilikaten 4 : 1 bis 1 : 1, vorzugsweise 3 : 1 bis 2 : 1. Aus derartigen Zusammensetzungen hergestellte Feuerleichtsteine besitzen nach dem Brennen eine gute Wärmeisolationswirkung bei gleichzeitig hoher Druckfestigkeit und Unempfindlichkeit gegen Temperaturwechselbeanspruchung.

Nach einer weiteren bevorzugten Ausführungsform der erfindungsgemäßen Zusammensetzung beträgt das molare Verhältnis von Calcium zu Aluminium in der Zusammensetzung 1 : 1 bis 1 : 4, insbesondere 1 : 1,5 bis 1 : 2,5. Aus solchen Zusammensetzungen hergestellte Feuerleichtstein zeichnen sich nach dem Brennvorgang durch einen hohen Gehalt von Anorthit aus, der, wie oben ausgeführt, vermutlich die gute Isolationswirkung dieser Steine bei gleichzeitig hoher Temperaturwechselbeanspruchbarkeit und Druckfestigkeit bewirkt.

Erfindungsgemäße Zusammensetzungen können zur Bildung einer Porenstruktur der Feuerleichtsteine Holzmehl und/oder einen Schaumbildner enthalten. Diese Substanzen können entweder in der erfindungsgemäßen Zusammensetzung enthalten sein oder aber erst bei der Herstellung von Feuerleichtsteinen aus solchen Zusammensetzungen hinzugegeben werden.

Durch den Einsatz von Holzmehl werden beim Anmachen der Zusammensetzung mit Wasser und anschließendem Abbinden dadurch Hohlräume geschaffen, dass die Holzpartikel beim anschließenden Brennvorgang verbrannt werden und entsprechende Poren hinterlassen. Dabei kann die Porosität der Feuerleichtsteine durch Menge und Größe bzw. Größenverteilung der Partikel des Holzmehls beeinflusst werden. Das Holzmehl kann eine Teilchengröße von bis zu 5 mm besitzen, wobei vorzugsweise Holzmehl mit einer Teilchengröße von bis zu 1 mm eingesetzt wird, um eine möglichst feine Porenstruktur zu erzeugen.

Unter einem Schaumbildner wird im Sinne der vorliegenden Erfindung eine Substanz verstanden, die alleine oder in Mischung mit einer Flüssigkeit, insbesondere mit Wasser in der Lage ist, einen Schaum zu bilden. Hierfür kommen beispielsweise handelsübliche Tenside in Betracht. Diese können kationisch, anionisch, nicht-ionisch oder auch amphoter sein. Werden anionische Tenside eingesetzt, können insbesondere solche Tenside verwendet werden, welche mit Calciumionen keine Fällungsreaktion durchlaufen. Dies gilt insbesondere für den Fall, dass Gips oder andere stark Calciumionen-haltige Bindemittel verwendet werden.

Erfindungsgemäße Zusammensetzungen können darüber hinaus weitere Bestandteile enthalten. Diese sind insbesondere ausgewählt aus Rheologiemodifikatoren, insbesondere Fließverbesserern, Abbindeverzögerem, Abbindebeschleunigern, Füllstoffen, insbesondere Leichtfüllstoffen, Pigmenten, Netzmitteln, Schaumstabilisatoren sowie Mischungen von diesen. Die zuvor genannten Substanzen können bereits in der Zusammensetzung enthalten sein und/oder bei der Herstellung von Feuerleichtsteinen aus diesen Zusammensetzungen zugesetzt werden.

Um die Abbindezeiten zu verlängern, können der Zusammensetzung sogenannte Abbindeverzögerer ("Verzögerer") zugesetzt werden; hierbei handelt es sich um Zusätze bzw. Zusatzmittel, die das Abbinden - synonym auch als Aushärten bezeichnet - verzögern. Derartige Verzögerer insbesondere für die Abbindereaktion bei Gips sind beispielsweise in den Druckschriften DE 101 27 060 A1, EP-A-0 607 039, EP-A-0 633 390, oder EP-A-1 270 530 beschrieben. Aufgrund ihrer abbindeverzögernden Wirkung werden die Verzögerer synonym bisweilen auch als Hydratationsverzögerer oder Hydratationsinhibitoren bezeichnet. Besonders bevorzugt sind solche Abbindeverzögerer, welche die Calciumionen des abbindefähigen Gipses reversibel komplexieren können.

Der Einsatz von Abbindeverzögeren ist insbesondere dann bevorzugt, wenn die erfindungsgemäße Zusammensetzung als Einkomponentenmischung hergestellt werden soll. Denn dann kann eine solche, einen Abbindeverzögerer enthaltende Mischung, bei der Herstellung von Feuerleichtsteinen hieraus ohne weiteres mit Wasser vermischt werden, ohne dass der bereits oben erörterte Zeitdruck durch den Start der Abbindereaktion des Bindemittels entsteht. Dies gilt insbesondere, wenn auch nicht ausschließlich dann, wenn Gips, Calciumsulfat-halbhydrat und/oder Anhydrit als Bindemittel eingesetzt werden.

Beispiele für erfindungsgemäß bevorzugte Abbindeverzögerer sind organische Säuren und deren Salze, insbesondere Acrylsäure- und Methacrylsäurepolymere und Methacrylsäurecopolymere, wie (Meth□)Acrylsäure/Maleinsäure(anhydrid)-Copolymere, Weinsäure und Citronensäure; Succinimid- und Aspartatpolymere und Aspartatcopolymere; mit Carboxylgruppen substituierte Polymere (z. B. carboxylgruppenhaltige polymerisierte Aminosäuren, mit Carboxylgruppen substituierte polymere Zucker, mit Carboxylgruppen substituierte modifizierte Polyacrylate etc.), Phosphate, wie Hexamethaphosphat und Tetranatriumpyrophosphat, sowie Mischungen der vorgenannten Verbindungen.

Die Menge an gegebenenfalls vorhandenem Abbindeverzögerer kann gleichermaßen in weiten Grenzen variieren. Sie sollte insbesondere derart ausgewählt sein, dass ein signifikanter abbindeverzögernder Effekt bewirkt wird. Im allgemeinen wird der Abbindeverzögerer, falls vorhanden, in Mengen von 0,1 bis 5 Gew.-%, insbesondere 0,5 bis 2 Gew.-%, bezogen auf das erfindungsgemäße System, eingesetzt. Gleichermaßen ist es aber auch möglich, von den vorgenannten Mengen abzuweichen, falls dies anwendungsbedingt erforderlich sein sollte.

Falls das erfindungsgemäße System einen Abbindeverzögerer umfaßt, sollte es darüber hinaus auch einen Abbindebeschleuniger enthalten, welcher vorteilhafterweise erst bei der Herstellung der Feuerleichtsteine aus solchen Zusammensetzungen zugesetzt wird, um die abbindeverzögernde Wirkung des Abbindeverzögerers aufzuheben bzw. den Abbindevorgang zu beschleunigen.

Ohne sich auf eine bestimmte Theorie festlegen zu wollen, lässt sich die abbindebeschleunigende Wirkung bzw. die die abbindeverzögernde Wirkung des Abbindeverzögerers aufhebende Wirkung von sogenannten Abbindebeschleunigern dadurch erklären, dass die durch die Abbindeverzögerer reversibel gebildeten Calciumkomplexe, welche den Abbindevorgang verhindern, durch die Zugabe des Abbindebeschleunigers aufgelöst werden, so dass die zuvor komplexierten Calciumionen wieder freigesetzt werden und dann mit den vorhandenen Sulfationen zu abgebundenem Gips abreagieren können.

Als Abbindebeschleuniger können die aus dem Stand der Technik als solche bekannten Verbindungen eingesetzt werden. Insbesondere kommen als Abbindebeschleuniger Verbindungen aus der Gruppe von Aluminium-, Eisen-, Zink-, Alkali- und Erdalkalisalzen in Betracht. Vorzugsweise handelt es sich bei den Abbindebeschleunigern um Aluminium-(III)-, Zink-(II)- und Eisen-(III)-Salzen, insbesondere Aluminium-, Eisen- und Zinksulfat.

Die Mengen, mit denen der erfindungsgemäß eingesetzte Abbindebeschleuniger, falls vorhanden, eingesetzt wird, kann gleichermaßen in weiten Bereichen variieren. Sie sollte insbesondere derart ausgewählt sein, dass ein signifikanter abbindebeschleunigender Effekt bewirkt wird. Im allgemeinen wird der Abbindebeschleuniger in Mengen von 0,01 bis 5 Gew.-%, vorzugsweise 0,1 bis 0,5 Gew.-%, bezogen auf die gesamte Mischung aus erfindungsgemäßer Zusammensetzung und weiteren Komponenten, die dieser bei der Herstellung der Feuerleichtsteine zugesetzt werden, eingesetzt. Gleichermaßen ist es aber auch möglich, von den vorgenannten Mengen abzuweichen, falls dies anwendungsbedingt erforderlich sein sollte.

Beispiele für Netzmittel sind hochsiedende Lösemittel und Weichmacher, insbesondere mit Siedepunkten oberhalb von 200 °C, vorzugsweise oberhalb von 250 °C. Beispiele hierfür sind Glykole und Glykolderivate, wie z. B. Butyltriglykol und dessen Derivate, z. B. Butyltrigklykolacetat.

Zur Erzielung einer verbesserten bzw. erleichterten Aufschäumbarkeit bei der Herstellung von Feuerleichtsteinen aus den erfindungsgemäßen Zusammensetzungen kann es vorteilhaft sein, wenn die erfindungsgemäße Zusammensetzung darüber hinaus mindestens einen Schaumstabilisator enthält oder ein solcher bei der Herstellung der Feuerleichtsteine aus diesen Zusammensetzungen zugesetzt wird.

Erfindungsgemäß geeignete Schaumstabilisatoren sind beispielsweise höhere Alkohole, insbesondere C₁₀-C₃₀-Alkohole, oder aber sogenannte Fettalkohole, insbesondere C₁₆-C₁₈-Fettalkohole, oder gegebenenfalls alkoxylierte, insbesondere ethoxylierte höhere Alkohole und Fettalkohole oder aber Fettamine und deren Salze (z. B. Ammoniumstearat). Beispiele für erfindungsgemäß besonders geeignete Schaumstabilisatoren sind Hexadekanol, Oleylcetylalkohol+5-EO, Laurylethersulfatnatriumsalz, Talgalkohol+14-EO und C₁₆-C₁₈-Fettalkohole.

Die Menge an Schaumstabilisatoren in dem erfindungsgemäßen System kann in weiten Bereichen variieren. Im allgemeinen werden die Schaumstabilisatoren in Mengen von 0,05 bis 5 Gew.-%, insbesondere 0,3 bis 1,5 Gew.-%, bezogen auf die erfindungsgemäße Zusammensetzung, eingesetzt. Gleichermaßen ist es aber auch möglich, von den vorgenannten Mengen abzuweichen, falls dies anwendungsbedingt erforderlich sein sollte.

Erfindungsgemäß geeignete Füllstoffe können ausgewählt sein aus der Gruppe von Flugaschen, Sanden (z. B. Quarzsanden oder Hüttensanden), Siliziumdioxid (z. B. Mikrosilika, Cenospheres), Hohlglaskugeln, Fasern (z. B. mineralische Fasern, Kunststofffasern, Cellulosefasern etc.), Perliten, Vermiculiten, Blähtonen sowie Mischungen von zwei oder mehreren der vorgenannten Füllstoffe. Von diesen zuvor genannten Füllstoffen sind die Leichtfüllstoffe besonders bevorzugt. Hierunter werden Füllstoffe verstanden deren Dichte unterhalb von 1,5 g/cm³ liegt, insbesondere unterhalb von 1,0 g/cm³. Der Einsatz solcher Füllstoffe ist besonders bevorzugt, weil hierdurch einerseits die Dichte der aus solchen Füllstoffe enthaltenden Zusammensetzungen hergestellten Feuerleichtsteinen ebenfalls eine geringe Dichte aufweist. Außerdem verbessern Leichtfüllstoffe aufgrund ihrer Porosität bzw. der eingelagerten Luft die Isolationswirkung der Feuerleichtsteine.

Ein weiterer Gegenstand der vorliegenden Erfindung betrifft ein Verfahren zur Herstellung eines Feuerleichtsteins, das die folgenden Schritte umfasst:
a) Dispergieren einer erfindungsgemäßen Zusammensetzung in Wasser mit Ausnahme des anorganischen Bindemittels,
b) Herstellen einer Schaumkomponente aus einem Schaumbildner,
c) Zugabe der Schaumkomponente zur Mischung gemäß Schritt a) und mischen,
d) Zugabe des anorganischen Bindemittels zur Mischung gemäß Schritt c) und mischen zur Herstellung eines gießfähigen Schlickers,
e) Abgießen der Mischung gemäß Schritt d) in zumindest eine Form, Abbinden und Entformen zur Herstellung eines Formlings und
f) Brennen des Formlings.

Die Herstellung der Schaumkomponente aus einem Schaumbildner kann beispielsweise durch Mischen eines oder mehrerer Tenside ggf. unter Zugabe von Schaumstabilisatoren mit Wasser erfolgen. Die Herstellung der Schaumkomponente kann parallel zum Verfahrensschritt a) erfolgen.

Es hat sich im Rahmen der Entwicklungsarbeiten zur vorliegenden Erfindung herausgestellt, dass die für die Aufschäumung von solchen anorganischen Bindemitteln enthaltenden Mischungen die erhältlichen Schaumbildner nicht immer optimale Ergebnisse liefern. Aus diesem Grund wird vorzugsweise zur Herstellung der Schaumkomponente derart vorgegangen, dass eine Harzkomponente, insbesondere ein Kolophoniumharz, sowie eine Leimkomponente, die vorzugsweise ein Glutinleim ist, unter alkalischen Bedingungen in Wasser bei 60 bis 90 °C umgesetzt wird. Eine auf diese Weise hergestellte Schaumkomponente zeichnet sich durch einen sehr stabilen Schaum aus, der auch nach Mischen mit den übrigen Bestandteilen ausreichend lange eine Schaumstruktur aufrecht erhält, bis das anorganische Bindemittel abgebunden ist. Zur Einstellung der alkalischen Reaktionsbedingungen sind beispielsweise Alkali- und/oder Erdalkalimetallhydroxide, -oxide und/oder -carbonate verwendbar.

Eine erfindungsgemäß bevorzugte Schaumkomponente kann aus einer Mischung von 30 - 50 Gew.-% Kolophonium-Harz, 40 bis 50 Gew.-% Glutinleim, 5 bis 15 Gew.-% Kaliumcarbonat und 1 bis 10 Gew.-% Natriumhydroxid hergestellt werden. Weiter bevorzugt wird dabei die Summe dieser zuvor genannten Stoffe in einem Verhältnis von 1 : 1 bis 1 : 4, vorzugsweise von 1 : 2 bis 1 : 3 mit Wasser gemischt und miteinander umgesetzt.

Nach einer besonders bevorzugten Ausführungsform wird die auf die oben aufgeführte Weise hergestellte Schaumkomponente vor der Zugabe zu der Mischung gemäß Schritt a) mit der mit der 8- bis 10-fachen Menge an Wasser verdünnt. Auf diese Weise hergestellte Feuerleichtsteine zeichnen sich durch ein besonders gutes Isolationsverhalten bei gleichzeitig guten Druckfestigkeiten und hoher Resistenz gegen Temperaturwechselbeanspruchung aus.

Nach einer Weiterbildung des erfindungsgemäßen Verfahrens wird so vorgegangen, dass im Schritt c) so viel Schaumkomponente hinzu gegeben wird, dass die Dichte der erhaltenen Mischung 0,7 bis 1,3 g/cm³, insbesondere 0,85 bis 1,15 g/cm³, vorzugsweise 0,90 bis 1,10 g/cm³ beträgt. Auf diese Weise kann die Dichte und hiermit auch indirekt das Isolationsverhalten einerseits und andererseits auch die Druckfestigkeit des hieraus hergestellten Feuerleichtsteins auf das gewünschte Maß angepasst werden. Es hat sich herausgestellt dass die Einstellung solcher Dichten zu Feuerleichtsteinen führt, welche die an sich gegenläufigen Eigenschaften von hoher Druckfestigkeit und gutem Isolationsverhalten gleichermaßen erfüllen.

In weiterer Ausgestaltung des erfindungsgemäßen Verfahrens wird das Bindemittel vor der Zugabe zu der Mischung gemäß Schritt c) mit Wasser gemischt. Hierbei kann zusätzlich ein Abbindeverzögerer hinzugefügt werden. In diesem Zusammenhang kann es sich als vorteilhaft erweisen, wenn die Mischung gemäß Schritt a) einen Abbindebeschleuniger beinhaltet, mit dem die Verzögerungswirkung des Abbindeverzögerers in der anorganischen Bindemittelmischung aufgehoben bzw. überkompensiert wird, so dass nach Zugabe des anorganischen Bindemittels und Abgießen in Formen der Abbindevorgang mit hoher Geschwindigkeit von Statten geht. Auf diese Weise lassen sich die Herstellungsgeschwindigkeiten der erfindungsgemäßen Feuerleichtsteine an die Verarbeitungsgeschwindigkeit anpassen und insgesamt beschleunigen. Alternativ zur Zugabe eines Abbindebeschleunigers zur Mischung aus Schritt a) kann der Abbindebeschleuniger auch dem gießfähigen Schlicker aus Mischung nach Schritt a), Schaumkomponente und anorganischem Bindemittel zugefügt werden.

Nach einem alternativen Herstellungsverfahren kann so vorgegangen werden, dass eine erfindungsgemäße Zusammensetzung, welche einen Abbindeverzögerer enthält einschließlich des Bindemittels in Schritt a) in Wasser dispergiert wird. In Schritt b) erfolgt die Herstellung der Schaumkomponente wie oben beschrieben, welche dann in einem Schritt c) der Mischung aus a) hinzugefügt wird, da ein separates Anmachen des Bindemittels nicht mehr erforderlich ist, da dieses bereits enthalten ist. Gleichzeitig oder separat mit der Zugabe der Schaumkomponente wird ein Abbindebeschleuniger zugesetzt, der die Abbindereaktion des Bindemittels in Gang setzt. Anschließend wird die Mischung wie beim bereits beschriebenen Verfahren in Formen gegossen, die Mischung abgebunden, entformt, gegebenenfalls getrocknet und anschließend gebrannt.

Im Rahmen des erfindungsgemäßen Verfahrens ist es möglich, wenn auch nicht zwingend erforderlich, den Formling vor dem Brennen einem Trocknungsschritt zu unterwerfen. Dies kann beispielsweise direkt in einem Tunnelofen erfolgen, der verschiedene Temperaturbereiche besitzt und am Ofeneingang zunächst eine Trocknungsstrecke gefolgt von einer Brennstrecke. Es ist jedoch ohne weiteres möglich, formstabile Formlinge auch ohne Trocknungsschritt unmittelbar dem Brennofen zuzuführen.

Im Rahmen des erfindungsgemäßen Herstellverfahrens hat es sich als besonders vorteilhaft herausgestellt, wenn das Brennen des Formlings bei einer Temperatur von 1100 bis 1500 °C durchgeführt wird. Bei diesen Brenntemperaturen hergestellte Feuerleichtsteine zeichnen sich durch besonders vorteilhafte Eigenschaften in Bezug auf Stabilität und Isolationsvermögen aus.

Im Rahmen des erfindungsgemäßen Herstellverfahrens für Feuerleichtsteine können die Gießformen für die Formlinge so gewählt werden, dass sie von der Dimensionierung der gewünschten Größe der Feuerleichtsteine entsprechen. Alternativ ist es ebenso möglich, größere Gießformen zu verwenden und nach dem Brennen der Formlinge diese auf das gewünschte Maß zuzuschneiden.

Ein weiterer Gegenstand der vorliegenden Erfindung betrifft einen Feuerleichtstein, der nach dem erfindungsgemäßen Verfahren herstellbar ist. Durch die besondere Auswahl an Ausgangsstoffen ist es möglich, einen Feuerleichtstein mit einem Gehalt von Anorthit von wenigstens 75 Gew.-% herzustellen. Insbesondere besitzt ein erfindungsgemäßer Feuerleichtstein einen Gehalt an Anorthit von wenigstens 80, bevorzugt von wenigstens 83 Gew.-%, besonders bevorzugt von wenigstens 85 Gew.-%.

Nach einer Weiterbildung des erfindungsgemäßen Feuerleichtsteins beträgt dessen Gehalt aus der Summe von Quarz und Cristobalit weniger als 10 Gew.-%, insbesondere weniger als 5 Gew.-%, vorzugsweise weniger als 3 Gew.-%. Dies ist besonders vorteilhaft, da diese Steine beim Zurechtschneiden keine oder nur sehr geringe Mengen dieser Substanzen freisetzen, welche als potentiell karzinogen eingestuft werden.

Schließlich betrifft die vorliegende Erfindung noch die Verwendung eines erfindungsgemäßen Feuerleichtsteins als Isolierschicht in Hochtemperaturanlagen, insbesondere in Hochtemperaturöfen.

Die Erfindung wird im Folgenden anhand von Ausführungsbeispielen näher erläutert:

### Beispiel 1 (erfindungsgemäß):

In einer Wasservorlage werden Kyanit, Ton (beispielsweise Suzhou Clay), Wollastonit und Bentonit vorgemischt und gleichzeitig dispergiert. Die Einzelkomponenten werden dabei in folgenden Gewichtsverhältnissen miteinander gemischt:

| | |
|---|---|
| Kyanit | 40 Gew.-% |
| Ton | 29 Gew.-% |
| Wollastonit | 10 Gew.-% |
| Bentonit | 1 Gew.-% |

Das Wasser zu Feststoffverhältnis liegt dabei bei 120 : 80. Das resultierende Litergewicht dieser Mischung liegt bei etwa 1,75 bis 1,80 g/cm³.

Auf eine Chargenmenge von 200 kg dieser Mischung werden 0,15 cm³ Holzmehl zugegeben und gleichmäßig eingemischt.

Zur Herstellung der Schaumkomponente werden 38 Gew.-% eines Kolophoniumharzes, 48 Gew.-% Glutinleim, 9 Gew.-% Kaliumkarbonat und 5 Gew.-% Natriumhydroxid in der doppelten bis dreifachen Menge an Wasser aufgelöst und auf eine Temperatur von 60 bis 90 °C erhitzt. Nach Ablauf der Umsetzung wird die erhaltene Mischung unter intensiver Rührung mit der 8- bis 10-fachen Menge an Wasser verdünnt. Die fertig gestellte Schaumkomponente wird anschließend in einem Intensivrührwerk aufgeschäumt.

Von dieser Schaumkomponente wird zu der oben angegebenen Mischung mit Holzmehl eine solche Menge hinzugegeben, bis das Litergewicht der Gesamtmischung einen Wert von 0,95 bis etwa 1,00 g/cm³ erreicht hat. Zu dieser Mischung wird ein Gips/Wasser-Gemisch (30 : 20 kg) in den Mischer chargiert und die Gesamtmischung noch 1 bis 2 Minuten fertig gemischt.

Diese Mischung wird anschließend in Formen gegossen, getrocknet und bei 1260 °C für 4 Stunden gebrannt. Die resultierenden Steineigenschaften sind:

| | |
|---|---|
| Rohdichte | 500 kg/m³ |
| Kaltdruckfestigkeit | 1,05 - 1,23 MPa |
| Nachschwinden 1230 °C/24h Wärmeleitfähigkeit nach HDV | 0,0 - 0,3 % |
| bei 20 °C | 0,11 W/mK |
| bei 200 °C | 0,12 |
| bei 400 °C | 0,14 |
| bei 600 °C | 0,16 |
| bei 800 °C | 0,18 |
| bei 1000 °C | 0,21 |

Die Wärmeleitfähigkeit wurde hierbei nach dem Heißdraht-Verfahren HDV ermittelt. Die Messungen werden wie auch bei den folgenden Beispielen nach dem in DIN EN 993-14 beschriebenen "Prüfverfahren für dichte geformte feuerfeste Erzeugnisse - Teil 14: Bestimmung der Wärmeleitfähigkeit nach dem Heißdraht-(Kreuz-)Verfahren" durchgeführt.

Die Kaltdruckfestigkeit der Steine wurde gemäß der Prüfmethode DIN-EN 993/5 bestimmt.

Die Mineralanalyse dieser Steine ergibt:

| | |
|---|---|
| Anorthit | 87 Gew.-% |
| Mullit | 10 Gew.-% |
| Kristoballit/Quarz | 1 Gew.-% |
| Amorph | 2 Gew.-% |

Diese erfindungsgemäßen Feuerleichtsteine werden in den folgenden Beispielen 2 bis 4 mit herkömmlichen Feuerleichtsteinen verglichen.

### Beispiel 2 (Vergleichsbeispiel):

Analoge Herstellung wie nach Beispiel 1, jedoch ohne Wollastonit.

### Zusammensetzung:

| | |
|---|---|
| Kyanit | 40 Gew.-% |
| Ton | 29 Gew.-% |
| Gips (Halbhydrat) | 30 Gew.-% |
| Wollastonit | 0 Gew.-% |
| Bentonit | 1 Gew.-% |
| Wasser/Feststoff | 120/80 |

Die resultierenden Steineigenschaften sind:

| | |
|---|---|
| Rohdichte | 520 kg/m³ |
| Kaltdruckfestigkeit | 0,8 - 1,2 MPa |
| Nachschwinden 1230 °C/24h Wärmeleitfähigkeit nach HDV | 0,2 - 0,8 % |
| bei 20 °C | 0,15 W/mK |
| bei 200 °C | 0,18 |
| bei 400 °C | 0,20 |
| bei 600 °C | 0,23 |
| bei 800 °C | 0,26 |
| bei 1000 °C | 0,30 |

Mineralanalyse:

| | |
|---|---|
| Anorthit | 74 % |
| Mullit | 12% |
| Kristoballit/Quarz | 9% |
| Amorph | 5% |

Neben dem geringeren Anorthitgehalt zeigt die Zusammensetzung der Feuerleichtsteine gemäß Beispiel 2 insbesondere einen hohen Gehalt an Kristoballit bzw. Quarz von fast 10, was aufgrund der schädlichen bzw. karzinogenen Eigenschaften dieser Substanzen beim Zuschneiden der Steine nachteilig ist. Ferner erreichen diese Feuerleichtsteine bei weitem nicht das Isolationsverhalten der erfindungsgemäßen Steine. Außerdem erleiden die Steine ein höheres Nachschwinden, was sich nachteilig auf die Dimensionsstabilität der Steine auswirkt.

### Beispiel 3 (Vergleichsbeispiel):

Analoge Herstellung wie im Beispiel 2, jedoch mit einer herkömmlichen Schaumkomponente.

### Zusammensetzung:

| | |
|---|---|
| Kyanit | 40 Gew.-% |
| Ton | 29 Gew.-% |
| Gips (Halbhydrat) | 30 Gew.-% |
| Wollastonit | 0 Gew.-% |
| Bentonit | 1 Gew.-% |
| Wasser/Feststoff | 120/80 |

Die auf diese Weise hergestellten Feuerleichtsteine haben die folgenden Eigenschaften:

| | |
|---|---|
| Rohdichte | 530 kg/m³ |
| Kaltdruckfestigkeit | 0,7 - 0,9 MPa |
| Nachschwinden 1230 °C/24h Wärmeleitfähigkeit nach HDV | 0,3 - 1,0 % |
| bei 20 °C | 0,16 W/mK |
| bei 200 °C | 0,19 |
| bei 400 °C | 0,21 |
| bei 600 °C | 0,24 |
| bei 800 °C | 0,28 |
| bei 1000 °C | 0,32 |

Die Mineralanalyse dieser Feuerleichtsteine ergibt:

| | |
|---|---|
| Anorthit | 74 % |
| Mullit | 12 % |
| Kristoballit/Quarz | 9 % |
| Amorph | 5 % |

Auch in diesem Fall besitzen die erhaltenen Feuerleichtsteine neben dem geringeren Gehalt an Anorthit fast 10 % an Kristoballit bzw. Quarz. Die Druckfestigkeit dieser Steine liegt ebenfalls deutlich unter derjenigen der erfindungsgemäßen Feuerleichtsteine, denen sie auch in Bezug auf das Isolationsverhalten deutlich unterlegen sind. Schließlich unterliegen diese Steine auch einem deutlichen Schwund.

### Beispiel 4 (Vergleichsbeispiel):

Feuerleichtstein ohne Wollastonit und Schaum mit Cenopheres (Mikrohohlkugeln).

### Zusammensetzung:

| | |
|---|---|
| Kyanit | 32,4 Gew.-% |
| Ton | 17,6 Gew.-% |
| Gips (Halbhydrat) | 23,6 Gew.-% |
| Wollastonit | 0 Gew.-% |
| Bentonit | 2,9 Gew.-% |
| Holzmehl | 11,8 Gew.-% |
| Cenospheres | 11,7 Gew.-% |
| Wasser/Feststoff | 105/100 |

Die resultierenden Steineigenschaften sind:

| | |
|---|---|
| Rohdichte | 540 kg/m³ |
| Kaltdruckfestigkeit | 0,8 - 1,0 MPa |
| Nachschwinden 1230 °C/24h Wärmeleitfähigkeit nach HDV | 0,2 - 0,6 % |
| bei 20 °C | 0,16 W/mK |
| bei 200 °C | 0,19 |
| bei 400 °C | 0,21 |
| bei 600 °C | 0,25 |
| bei 800 °C | 0,28 |
| bei 1000 °C | 0,32 |

Die Mineralanalyse eines solchen Feuerleichtsteins ergibt:

| | |
|---|---|
| Anorthit | 70 % |
| Mullit | 16 % |
| Kristoballit/Quarz | 8 % |
| Amorph | 6 % |

Auch diese Steine erreichen weder in Bezug auf die Kaltdruckfestigkeit, noch bezüglich des Nachschwindens die Werte der erfindungsgemäßen Steine. Die Wärmeleitfähigkeit liegt auch deutlich schlechter als die der erfindungsgemäßen Steine bei gleichzeitig höherem Gehalt an gesundheitsgefährdendem Kristoballit bzw. Quarz.

Zusammenfassend ist festzustellen, dass die erfindungsgemäße Zusammensetzung die Herstellung von Feuerleichtsteinen mit deutlich verbesserten Eigenschaften erlaubt. Dies sind insbesondere die verbesserte Kaltdruckfestigkeit, ein höheres Isolationsvermögen, ein geringerer Schwund bei erhöhten Temperaturen sowie der geringere Gehalt an Cristobalit bzw. Quarz.

## Patentansprüche

1. Zusammensetzung zur Herstellung eines Feuerleichtsteins, enthaltend wenigstens ein Aluminiumsilikat und/oder ein Calcium-Aluminiumsilikat sowie ein anorganisches Bindemittel,
**dadurch gekennzeichnet, dass**
die Zusammensetzung einen Gehalt an Calciumsilikaten von 5 bis 25 Gew.-% bezogen auf die trockene Zusammensetzung aufweist.

2. Zusammensetzung nach Anspruch 1,
**dadurch gekennzeichnet, dass**
der Gehalt an Calciumsilikaten 7 bis 15 Gew.-% bezogen auf die trockene Zusammensetzung beträgt.

3. Zusammensetzung nach Anspruch 1 oder 2,
**dadurch gekennzeichnet, dass**
die Calciumsilikate ausgewählt sind aus Xonotlit, Tobermorit, CSH-Phasen, Wollastonit oder Mischungen hiervon.

4. Zusammensetzung nach einem der vorstehenden Ansprüche,
**dadurch gekennzeichnet, dass**
das Bindemittel ausgewählt ist aus nichthydraulischen Bindemitteln, insbesondere aus Gips, Calciumsulfat-halbhydrat, Anhydrit oder Mischungen von diesen.

5. Zusammensetzung nach einem der vorstehenden Ansprüche,
**dadurch gekennzeichnet, dass**
der Gehalt an Bindemittel 5 bis 40 Gew.-% beträgt, insbesondere 10 bis 30 Gew.-%, jeweils bezogen auf die trockene Zusammensetzung.

6. Zusammensetzung nach einem der vorstehenden Ansprüche,
**dadurch gekennzeichnet, dass**
das Gewichtsverhältnis zwischen Aluminiumsilikat und/oder Calcium-Aluminiumsilikat zu der Summe aus Bindemittel und Calciumsilikaten von 4 : 1 bis 1 : 1 beträgt, insbesondere von 3 : 1 bis 2 : 1.

7. Zusammensetzung nach einem der vorstehenden Ansprüche,
**dadurch gekennzeichnet, dass**
das molare Verhältnis von Calcium zu Aluminium von 1 : 1 bis 1 : 4 beträgt, insbesondere von 1 : 1,5 bis 1 : 2,5.

8. Zusammensetzung nach einem der vorstehenden Ansprüche,
**dadurch gekennzeichnet, dass**
die Zusammensetzung Holzmehl enthält.

9. Zusammensetzung nach einem der vorstehenden Ansprüche,
**dadurch gekennzeichnet, dass**
die Zusammensetzung einen Schaumbildner enthält.

10. Zusammensetzung nach einem der vorstehenden Ansprüche,
**dadurch gekennzeichnet, dass**
die Zusammensetzung weitere Bestandteile enthält, die insbesondere ausgewählt sind aus Rheologiemodifikatoren, insbesondere Fließverbesserern, Abbindeverzögerern, Abbindebeschleunigern, Füllstoffen, insbesondere Leichtfüllstoffen, Pigmenten, Netzmitteln, Schaumstabilisatoren sowie Mischungen von diesen.

11. Verfahren zur Herstellung eines Feuerleichtsteins, umfassend folgende Schritte:
a) Dispergieren einer Zusammensetzung nach einem der Ansprüche 1 bis 10 in Wasser mit Ausnahme des anorganischen Bindemittels,
b) Optional Herstellen einer Schaumkomponente aus einem Schaumbildner,
c) Zugabe der Schaumkomponente und/ oder Holzmehl zur Mischung gemäß Schritt a) und mischen,
d) Zugabe des anorganischen Bindemittels zur Mischung gemäß Schritt c) und mischen zur Herstellung eines gießfähigen Schlickers,
e) Abgießen der Mischung gemäß Schritt d) in zumindest eine Form, Abbinden und Entformen zur Herstellung eines Formlings und
f) Brennen des Formlings.

12. Verfahren nach Anspruch 11,
**dadurch gekennzeichnet, dass**
zur Herstellung der Schaumkomponente eine Harzkomponente, insbesondere ein Kolophoniumharz, sowie eine Leimkomponente, insbesondere ein Glutinleim, unter alkalischen Bedingungen in Wasser bei 60 bis 90 °C umgesetzt werden.

13. Verfahren nach Anspruch 12,
**dadurch gekennzeichnet, dass**
zur Einstellung der alkalischen Bedingungen Alkali- und/ oder Erdalkalimetallhydroxide, -oxide und/ oder -carbonate eingesetzt werden.

14. Verfahren nach einem der Ansprüche 11 bis 13,
**dadurch gekennzeichnet, dass**
die Schaumkomponente aus
30 bis 50 Gew.-% Kolophonium-Harz,
40 bis 50 Gew.-% Glutinleim,
5 bis 15 Gew.-% Kaliumcarbonat und
1 bis 10 Gew.-% Natriumhydroxid hergestellt wird, wobei die Summe dieser Stoffe insbesondere in einem Verhältnis von 1 : 1 bis 1 : 4, vorzugsweise von 1 : 2 bis 1 : 3 mit Wasser gemischt werden.

15. Verfahren nach einem der Ansprüche 11 bis 14,
**dadurch gekennzeichnet, dass**
die Schaumkomponente vor der Zugabe in Schritt c) mit der 8- bis 10-fachen Menge an Wasser verdünnt wird.

16. Verfahren nach einem der Ansprüche 11 bis 15,
**dadurch gekennzeichnet, dass**
das im Schritt c) so viel Schaumkomponente hinzugegeben wird, dass die Dichte der erhaltenen Mischung 0,7 bis 1,3 g/cm³, insbesondere 0,85 bis 1,15 g/cm³, vorzugsweise 0,90 bis 1,10 g/cm³ beträgt.

17. Verfahren nach einem der Ansprüche 11 bis 16,
**dadurch gekennzeichnet, dass**
das Bindemittel vor der Zugabe mit Wasser gemischt wird.

18. Verfahren nach einem der Ansprüche 11 bis 17,
**dadurch gekennzeichnet, dass**
der Formling vor dem Brennen einem Trocknungsschritt unterworfen wird.

19. Verfahren nach einem der Ansprüche 11 bis 18,
**dadurch gekennzeichnet, dass**
das Brennen des Formlings bei einer Temperatur von 1100 bis 1500 °C durchgeführt wird.

20. Verfahren nach einem der Ansprüche 11 bis 19,
**dadurch gekennzeichnet, dass**
der gebrannte Formling zugeschnitten wird.

21. Feuerleichtstein, herstellbar nach einem Verfahren gemäß einem der Ansprüche 11 bis 20.

22. Feuerleichtstein nach Anspruch 21,
**dadurch gekennzeichnet, dass**
dieser einen Gehalt an Anorthit von wenigstens 75 Gew.-% aufweist, insbesondere von wenigstens 80 Gew.-%, vorzugsweise wenigstens 83 Gew.-%.

23. Feuerleichtstein nach Anspruch 21 oder 22,
**dadurch gekennzeichnet, dass**
dessen Gehalt aus der Summe von Quarz und Cristoballit weniger als 10 Gew.-% beträgt, insbesondere weniger als 5 Gew.-%, vorzugsweise weniger als 3 Gew.-%.

24. Verwendung eines Feuerleichtsteins nach einem der Ansprüche 21 bis 23 als Isolierschicht in Hochtemperaturanlagen, insbesondere in Hochtemperaturöfen.

## Claims

1. A composition for the manufacture of a light-weight refractory brick, at least containing one aluminum silicate and/or one calcium aluminum silicate as well as an inorganic binding agent,
**characterized in that**
the composition comprises a calcium silicates content comprised between 5 and 25 % by weight referring to the dry composition.

2. A composition according to claim 1,
**characterized in that**
the calcium silicates content is comprised between 7 and 15 % by weight referring to the dry composition.

3. A composition according to claim 1 or 2,
**characterized in that**
the calcium silicates are selected from xenotlith, tobermorite, CSH phases, wollastonite or mixtures thereof.

4. A composition according to one of the preceding claims,
**characterized in that**
the binding agent is selected from non-hydraulic binding agents, in particular from gypsum, calcium sulphate hemi-hydrate, anhydrite or mixtures of these ones.

5. A composition according to one of the preceding claims,
**characterized in that**
the binding agent content is comprised between 5 and 40 % by weight, in particular between 10 and 30 % by weight, respectively referring to the dry composition.

6. A composition according to one of the preceding claims,
**characterized in that**
the weight ratio between aluminum silicate and/or calcium aluminum silicate and the sum of binding agent and calcium silicates is comprised between 4 : 1 and 1 : 1, in particular between 3 : 1 and 2 : 1.

7. A composition according to one of the preceding claims,
**characterized in that**
the molar ratio between calcium and aluminum is comprised between 1 : 1 and 1 : 4, in particular between 1 : 1.5 and 1 : 2.5.

8. A composition according to one of the preceding claims,
**characterized in that**
the composition contains wood flour.

9. A composition according to one of the preceding claims,
**characterized in that**
the composition contains a foaming agent.

10. A composition according to one of the preceding claims,
**characterized in that**
the composition contains other components, which are in particular selected from rheology modifiers, in particular flow improvers, setting retarders, curing accelerators, fillers, in particular lightweight fillers, pigments, wetting agents, foam stabilizers as well as mixtures of these ones.

11. A method for manufacturing a light-weight refractory brick, comprising the following steps:
a) dispersing a composition according to one of the claims 1 through 10 in water, excluding the inorganic binding agent,
b) optionally producing a foam component from a foaming agent,
c) adding the foam component and/or wood flour to the mixture according to step a) and mixing
d) adding the inorganic binding agent to the mixture according to step c) and mixing for producing a pourable slurry,
e) decanting the mixture according to step d) into at least one mould, hardening and demoulding for producing a moulded product and
f) firing the moulded product.

12. A method according to claim 11,
**characterized in that**
for producing the foam component, a resin component, in particular a rosin resin, as well as a glue component, in particular a glutine glue, are transformed under alkaline conditions in water at 60 to 90°C.

13. A method according to claim 12,
**characterized in that**
alkali and/or alkaline earth metal hydroxides, oxides and/or carbonates are used for setting the alkaline conditions.

14. A method according to one of the claims 11 through 13, **characterized in that**
the foam component is produced from
30 to 50 % by weight rosin resin,
40 to 50 % by weight glutine glue,
5 to 15 % by weight potassium carbonate and
1 to 10 % by weight sodium hydroxide, wherein the sum of these substances is mixed with water, in particular in a ratio comprised between 1 : 1 and 1 : 4, preferably between 1 : 2 and 1 : 3.

15. A method according to one of the claims 11 through 14, **characterized in that**
the foam component is diluted with 8 to 10 times the quantity of water before being added in step c).

16. A method according to one of the claims 11 through 15,
**characterized in that**
in step c), a quantity of the foam component is added, such that the density of the obtained mixture is comprised between 0.7 and 1.3 g/cm³, in particular between 0.85 and 1.15 g/cm³, preferably between 0.90 and 1.10 g/cm³.

17. A method according to one of the claims 11 through 16,
**characterized in that**
the binding agent is mixed with water before being added.

18. A method according to one of the claims 11 through 17,
**characterized in that**
the moulded product is subjected to a drying step before being fired.

19. A method according to one of the claims 11 through 18,
**characterized in that**
the moulded product is fired at a temperature comprised between 1100 and 1500°C.

20. A method according to one of the claims 11 through 19,
**characterized in that**
the fired moulded product is cut to seize.

21. A light-weight refractory brick which can be manufactured according to a method according to one of the claims 11 through 20.

22. A light-weight refractory brick according to claim 21,
**characterized in that**
this one comprises an anorthite content of at least 75 % by weight, in particular at least 80 % by weight, preferably at least 83 % by weight.

23. A light-weight refractory brick according to claim 21 or 22,
**characterized in that**
its content of the sum of quartz and cristoballite is less than 10 % by weight, in particular less than 5 % by weight, preferably less than 3 % by weight.

24. A utilization of a light-weight refractory brick according to one of the claims 21 through 23 as insulating layer in high-temperature installations, in particular in high-temperature furnaces.

## Revendications

1. Composition destinée à la fabrication d'une brique légère réfractaire, contenant au moins un silicate d'aluminium et/ou un silicate de calcium-aluminium ainsi qu'un liant inorganique,
**caractérisée en ce que**
la composition comprend une teneur en silicates de calcium comprise entre 5 et 25 % en poids par rapport à la composition sèche.

2. Composition selon la revendication 1,
**caractérisée en ce que**
la teneur en silicates de calcium est comprise entre 7 et 15 % en poids par rapport à la composition sèche.

3. Composition selon la revendication 1 ou la revendication 2,
**caractérisée en ce que**
les silicates de calcium sont sélectionnés dans la xonolithe, la tobermorite, les phases CSH, la wollastonite ou les mélanges de celles-ci.

4. Composition selon l'une des revendications précédentes,
**caractérisée en ce que**
le liant est sélectionné dans des liants non hydrauliques, notamment dans le plâtre, l'hémi-hydrate de sulfate de calcium, l'anhydrite ou des mélanges de ceux-ci.

5. Composition selon l'une des revendications précédentes,
**caractérisée en ce que**
la teneur en liant est comprise entre 5 et 40 % en poids, notamment entre 10 et 30 % en poids, respectivement par rapport à la composition sèche.

6. Composition selon l'une des revendications précédentes,
**caractérisée en ce que**
le rapport pondéral entre le silicate d'aluminium et/ou le silicate de calcium-aluminium et la somme du liant et des silicates de calcium est compris entre 4 : 1 et 1 : 1, notamment entre 3 : 1 et 2 : 1.

7. Composition selon l'une des revendications précédentes,
**caractérisée en ce que**
le rapport molaire entre le calcium et l'aluminium est compris entre 1 : 1 et 1 : 4, notamment entre 1 : 1,5 et 1 : 2,5.

8. Composition selon l'une des revendications précédentes,
**caractérisée en ce que**
la composition contient de la farine de bois.

9. Composition selon l'une des revendications précédentes,
**caractérisée en ce que**
la composition contient un agent moussant.

10. Composition selon l'une des revendications précédentes,
**caractérisée en ce que**
la composition contient d'autres composants, qui sont notamment sélectionnés dans les agents modifiant la rhéologie, notamment les agents d'amélioration de l'écoulement, les retardeurs de prise, les accélérateurs de prise, les charges, les charges allégées, les pigments, les agents mouillants, les stabilisants de mousse ainsi que des mélanges de ceux-ci.

11. Procédé de fabrication d'une brique légère réfractaire, comprenant les étapes suivantes de :
a) disperser une composition selon l'une des revendications 1 à 10 dans l'eau à l'exception du liant inorganique,
b) produire facultativement un composant de mousse à partir d'un agent moussant,
c) ajouter le composant de mousse et/ou de la farine de bois au mélange selon l'étape a) et mélanger,
d) ajouter le liant inorganique au mélange selon l'étape c) et mélanger pour produire une barbotine pouvant couler,
e) décanter le mélange selon l'étape d) dans au moins une moule, faire prendre le mélange et démouler la pièce pour produire un corps moulé et
f) cuire le corps moulé.

12. Procédé selon la revendication 11,
**caractérisé en ce qu'**
on fait réagir un composant de résine, notamment une résine de colophane, ainsi qu'un composant de colle, notamment une colle de peau, dans des conditions alcalines dans l'eau à 60 jusqu'à 90 °C pour produire le composant de mousse.

13. Procédé selon la revendication 12,
**caractérisé en ce qu'**
on utilise des hydroxydes, des oxydes et/ou des carbonates alcalins et/ou de terres alcalines pour ajuster les conditions alcalines.

14. Procédé selon l'une des revendications 11 à 13,
**caractérisé en ce qu'**
on produit le composant de mousse à partir de
30 à 50 % en poids de résine de colophane,
40 à 50 % en poids de colle de peau,
5 à 15 % en poids de carbonate de potassium et
1 à 10 % en poids d'hydroxyde de sodium, la somme de ces substances étant mélangée avec de l'eau dans un rapport de 1 : 1 à 1 : 4, de préférence de 1 : 2 à 1 : 3.

15. Procédé selon l'une des revendications 11 à 14,
**caractérisé en ce qu'**
on dilue le composant de mousse avec 8 à 10 fois la quantité d'eau avant de l'ajouter dans l'étape c).

16. Procédé selon l'une des revendications 11 à 15,
**caractérisé en ce qu'**
on ajoute une telle quantité de composant de mousse dans l'étape c) que la densité du mélange obtenu est comprise entre 0,7 et 1,3 g/cm³, notamment entre 0,85 et 1,15 g/cm³, de préférence entre 0,90 et 1,10 g/cm3.

17. Procédé selon l'une des revendications 11 à 16,
**caractérisé en ce qu'**
on mélange le liant avec de l'eau avant de l'ajouter.

18. Procédé selon l'une des revendications 11 à 17,
**caractérisé en ce qu'**
on soumet le corps moulé à une étape de séchage avant de le cuire.

19. Procédé selon l'une des revendications 11 à 18,
**caractérisé en ce qu'**
on effectue la cuisson du corps moulé à une température comprise entre 1100 et 1500°C.

20. Procédé selon l'une des revendications 11 à 19,
**caractérisé en ce qu'**
on découpe le corps moulé cuit.

21. Brique légère réfractaire pouvant être fabriquée selon un procédé selon l'une des revendications 11 à 20.

22. Brique légère réfractaire selon la revendication 21,
**caractérisé en ce que**
celle-ci comprend une teneur en anorthite d'au moins 75 % en poids, notamment d'au moins 80 % en poids, de préférence d'au moins 83 % en poids.

23. Brique légère réfractaire selon la revendication 21 ou la revendication 22,
**caractérisé en ce que**
sa teneur en la somme de quartz et de cristobalite est plus faible que 10 % en poids, notamment plus faible que 5 % en poids, de préférence plus faible que 3 % en poids.

24. Utilisation d'une brique légère réfractaire selon l'une des revendications 21 à 23 en tant que couche isolante dans des installations à haute température, notamment des fours à haute température.
